# EUROPEAN PATENT APPLICATION

(11) **EP 1 462 423 A1**
(43) Date of publication of application: **29.09.2004**
(21) Application number: 03380065.7
(22) Date of filing: 21.03.2003
(51) Int. Cl.: C03C 27/12, B32B 17/10

(54) **Ornamental multilayer glass**

(71) Applicant: CRISTALES CURVADOS S.A., E-08400 Granollers, Barcelona (ES)
(72) Inventor: Figuerola Gili, Fernando, 08400 Granollers (Barcelona) (ES)
(74) Representative: Esteban Perez-Serrano, Maria Isabel

(57) **Abstract**

The present invention relates to ornamental multi-layer glass, of among the stratified glasses, wherein a texture is shown similar to the surface of a material different to the glass such as may be wood or stone without having to incorporate such materials. In this invention use is made of a double glass layer between the layers of which a paper is arranged printed on one or both of its faces the assembly being joined by a transparent adhesive. The printed motif, through the glass, has the same appearance as the material represented reducing production costs drastically.

## Description

### OBJECT OF THE INVENTION

The present invention relates to ornamental multi-layer glass, of among the stratified glasses, wherein a texture is shown similar to the surface of a material different to glass such as wood or stone without the necessity to incorporate such materials.

The present invention is characterized in the use of a double glass sheet between the layers of which a paper is arranged printed on one or both of its faces the assembly being joined by a transparent adhesive.

The printed motif, through the glass, has the same appearance as the material represented reducing production costs drastically.

### BACKGROUND OF THE INVENTION

Multi-layer glasses are known with different functions depending on the internal structure and on the layers included in the stratification.

Among these glasses, mention is made of those which incorporate in the interior thereof a layer which serves as solar filter wherein the filter layer is protected from the weather since it is adhered on the interior face.

It allows simultaneously the passage of sunlight after filtering the rays, allowing only the light to pass the frequency of which is within the ranges predetermined by the filter layer.

Among this type of glasses, is a particular class which incorporates mirrored layers which allow one to see through it in one direction whilst in the opposite direction it behaves as a mirror.

Multi-layer glasses intended for use in vehicles are also known. This type of laminated glasses incorporates a plastic intermediate sheet which, in the event of impact impedes the glass from shattering and being projected against the driver.

With regard to glasses which also have an ornamental function, there are on the market those which are formed by several glass layers wherein between two of them the material to be represented is included in laminar form

For example, in the case of wanting to represent a wooden surface protected by glass, use is made of thin sheets of wood so that as only the surface is visually accessible, no more than a thin sheet is necessary.

However, the manipulation of thin sheets of wood, stone, or other materials which can serve as an ornamental motif is complicated since when seeking a reduced thickness to reduce the product cost, the fragility or possibility of breaking is increased rendering the sheet unusable and of course making the end product more expensive as a result of the costs of manipulation.

The present invention overcomes these drawbacks by making use of printed papers that reduce the product cost and simplify manipulation.

### DESCRIPTION OF THE INVENTION

The present invention relates to an ornamental multi-layer glass with a stratified structure which represents a certain texture identifiable with a material such as may be wood or stone.

The structure used in the invention consists in making use of two glass layers between which a printed paper is arranged.

The three elements are joined with a transparent adhesive, preferably a butyral, so that the material seems to be completely integrated inside the glass.

The texture of the paper used is important since it determines the degree of resemblance of the material represented in the printing with the natural material.

Although it is true that quality printing can simulate a certain material very successfully, the paper must allow the appropriate degree of realism to be given.

In part, the texture of a natural material is given by the presence of roughness or of textures which can reveal a certain motif, such is the case with wood wherein the texture is composed by a directional grain.

The use of a mainly cellulosic paper, with an appropriate thickness, allows the printed image to already contribute a certain texture; or that this texture is partially simulated by for example the election of the paper weave laid in a certain preferred direction.

The integration by means of the adhesive in the glass contributes a degree of brilliance which emphasizes this type of textures giving rise to a realistic aspect without having made use of original materials which would augment the final cost of the product.

### DESCRIPTION OF THE DRAWINGS

The present descriptive specification is completed with a set of drawings, illustrating but in no way restricting the preferred embodiment of the invention.

Figure 1 shows a perspective of the elements which configure the multi-layer glass.

Figure 2 shows a section of a preferred embodiment of the invention where the presence of the adhesive is highlighted.

### PREFERRED EMBODIMENT OF THE INVENTION

The present invention consists of an ornamental multi-layer glass with a stratified structure in which a printed paper is incorporated internally representing a material such as wood or stone.

The structure of the glass consists of two layers (1) of glass between which the printed paper (2) is arranged.

Between the paper (2) and each of the layers (1) of glass (1) there is an adhesive layer (3) which establishes the union.

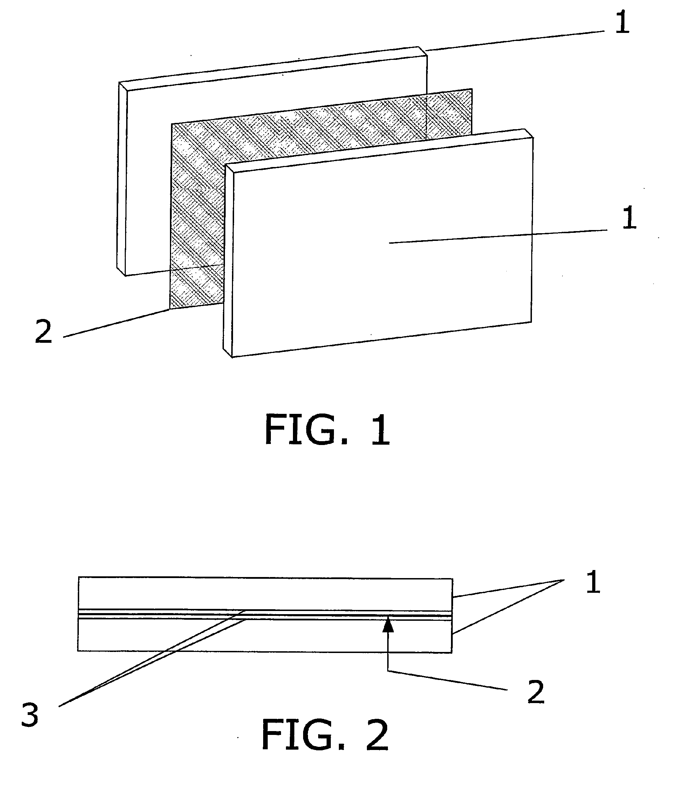

This adhesive layer (3), although thin, is of sufficient thickness to include the roughness of the weave of the paper used emphasizing the printed image such as is shown in figure 2.

The printed image can be on one face or on both depending on the function of the glass so constructed.

Since this type of ornamental glasses is used for example as a means of compartmentalizing spaces in offices, printing makes sense on both faces.

However, in cases where the glass has one of the two faces visually inaccessible, this second printing is not necessary.

The essential nature of this invention is not altered by variations in materials, form, size and arrangement of the component elements, described in a non-limiting fashion which is sufficient for an expert to proceed to the reproduction thereof.

## Claims

1. Ornamental multi-layer glass, of among the stratified glasses which incorporate intermediate layers, **characterized in that** it is composed by two glass layers (1) between which is arranged a printed paper (2) joined by a transparent adhesive (3), preferably butyral.

2. Ornamental multi-layer glass according to the first claim **characterized in that** the paper (2) is printed on both faces.

3. Ornamental multi-layer glass according to the first claim **characterized in that** the printed paper (2) includes a texture in correspondence with the printed image.
